# EUROPEAN PATENT APPLICATION

(11) **EP 3 954 508 A1**
(43) Date of publication of application: **16.02.2022**
(21) Application number: 19924470.8
(22) Date of filing: 12.04.2019
(51) Int. Cl.: B25J 13/08

(54) **ROBOT SYSTEM, END EFFECTOR SYSTEM, END EFFECTOR UNIT, AND ADAPTER**

(71) Applicant: Nikon Corporation, Minato-ku, Tokyo 108-6290 (JP)
(72) Inventor: SATO, Shinji, Tokyo 108-6290 (JP)
(74) Representative: Hoffmann Eitle
(86) International application number: PCT/JP2019/016043
(87) International publication number: WO 2020/208826

(57) **Abstract**

A robot system includes an end effector that is able to work on a workpiece, a support part configured to support the end effector in a state in which the end effector is displaceable, a first driving part configured to drive the end effector via the support part with a first stroke, a detector configured to detect a position of the end effector, and a second driving part that is disposed between the support part and the end effector and that is configured to drive the end effector with respect to the support part with a second stroke smaller than the first stroke based on a position information of the end effector detected by the detector.

## Description

### [Technical Field]

The present invention relates to a robot system, an end effector system, an end effector unit, and an adapter.

### [Background Art]

In the related art, a technology related to a robot apparatus having a robot arm and an end effector used, for example, for the purpose of assembly of products or the like is disclosed (for example, see Patent Literature 1). In the above-mentioned related art, it is difficult to achieve improvement of positioning accuracy of the end effector.

### [Citation List]

### [Patent Literature]

[Patent Literature 1]
US Patent No. 4994639

### [Summary of Invention]

### [Technical Problem]

According to a first aspect, there is provided a robot system including: an end effector that is able to work on a workpiece; a support part configured to support the end effector in a state in which the end effector is displaceable; a first driving part configured to drive the end effector via the support part with a first stroke; a detector configured to detect a position of the end effector; and a second driving part that is disposed between the support part and the end effector and that is configured to drive the end effector with respect to the support part with a second stroke smaller than the first stroke based on a position information of the end effector detected by the detector.

According to a second aspect, there is provided an end effector system including: an end effector that is able to work on a workpiece; a support part that has a connecting element configured to connect the end effector to a robot unit and that is configured to support the end effector in a state in which the end effector is displaceable; a detector configured to detect position information of the end effector; and a driving part that is disposed between the end effector and the support part and that is configured to drive the end effector with respect to the support part with a second stroke smaller than a first stroke of the robot unit based on the position information of the end effector detected by the detector.

According to a third aspect, there is provided an end effector unit including: an end effector that is able to work on a workpiece; a support part that has a connecting element configured to connect the end effector to a robot unit and that is configured to support the end effector in a state in which the end effector is displaceable; and a driving part that is disposed between the end effector and the support part and that is configured to electromagnetically drive the end effector with respect to the support part.

According to a fourth aspect, there is provided an adapter including: a support part that has a first connecting element which is connectable with a robot unit and that is configured to support an end effector in a state in which the end effector is displaceable; a pedestal part that has a second connecting element which is connectable with the end effector; and a driving part that is disposed between the support part and the pedestal part and that is configured to electromagnetically drive the end effector with respect to the support part via the pedestal part.

### [Brief Description of Drawings]

Fig. 1 is a view showing an example of a robot system of an embodiment.
Fig. 2 is a view showing an example of configuration of a connecting portion between an arm section and an end effector of the embodiment.
Fig. 3 is a view showing an example of disposition of a linear motor of the embodiment.
Fig. 4 is a view showing an example of position detection of the end effector of the embodiment.
Fig. 5 is a view showing another example of position detection of the end effector of the embodiment.
Fig. 6 is a view showing an example of disposition of a detector of the embodiment.
Fig. 7 is a view showing a specific example of disposition of the detector of the embodiment.
Fig. 8 is a view showing an example of a detection method of the detector of the embodiment.
Fig. 9 is a view showing another example of disposition of the detector of the embodiment.
Fig. 10 is a perspective view showing an example of an external configuration of the end effector of the embodiment.
Fig. 11 is a bottom view showing an example of an external configuration of the end effector of the embodiment.
Fig. 12 is a side view showing an example of an external configuration of the end effector of the embodiment.
Fig. 13 is a view showing an example of a state in which a hand section of the end effector of the embodiment grips a workpiece.
Fig. 14 is a view showing an example of a functional configuration of a controller of the embodiment.

### [Description of Embodiments]

Hereinafter, an embodiment of the present invention will be described with reference to the accompanying drawings.

### [Configuration of robot system]

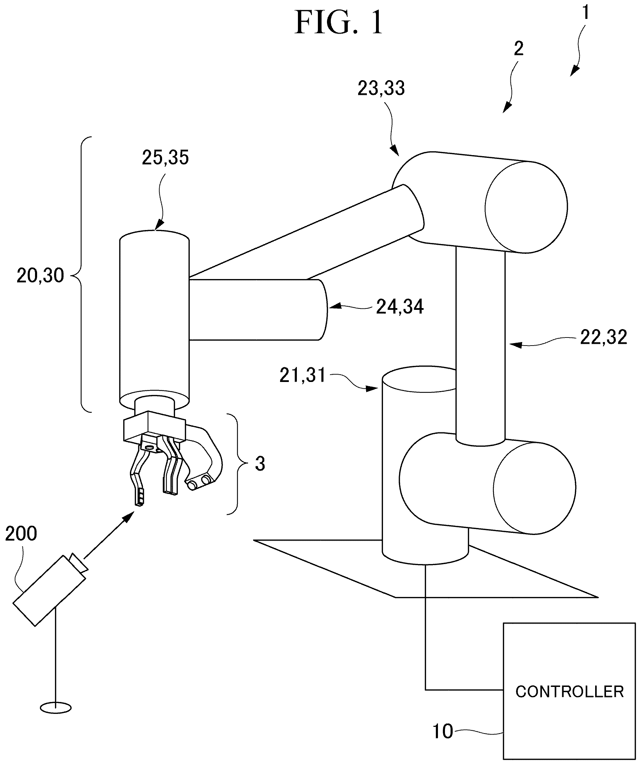

Fig. 1 is a view showing an example of a configuration of a robot system 1 of the embodiment. The robot system 1 includes a robot unit 2, an end effector unit 3, a detector 200, and a controller 10.

The robot unit 2 includes an arm section 20 and an arm driving part 30.

The end effector unit 3 includes a support part 41, a pedestal driving part 50, a pedestal part 61, and an end effector 62.

Further, the pedestal part 61 and the end effector 62 may be generally referred to as a pedestal-attached end effector 60. In addition, the pedestal-attached end effector 60 may be simply referred to as an end effector.

In addition, while a case in which the pedestal part 61 and the end effector 62 are configured as separate parts is disclosed in the following description, there is no limitation thereto and the pedestal part 61 and the end effector 62 may be configured integrally.

In addition, the arm section 20 and the support part 41 may be configured integrally. In the following description, the arm section 20 and the support part 41 may be generally referred to as a support part-attached arm section 40.

The detector 200 detects a position of the end effector 62. In addition, the detector 200 may detect a posture of the end effector 62. The detector 200 detects a position and a posture of the end effector 62. Here, the position of the end effector 62 is coordinates of the end effector 62 in a space in which the robot unit 2 is installed. The posture of the end effector 62 is an orientation of the end effector 62 (or a direction of the end effector 62) at the position in the space in which the robot unit 2 is installed. Further, in the following description, the position and the posture of the end effector 62 may be described without distinction as the position of the end effector 62 (or the posture of the end effector 62).

The controller 10 controls a position or a posture of the robot unit 2 or both by controlling the arm driving part 30 included in the robot unit 2.

The robot unit 2 of the embodiment is an articulated arm type robot. As an example, the robot unit 2 includes five arms (for example, a first arm section 21 to a fifth arm section 25) connected in sequence by joints. The robot unit 2 includes five arm driving parts 30 (for example, a first arm driving part 31 to a fifth arm driving part 35) corresponding to the five arms. That is, the robot unit 2 includes articulated arms. Further, the robot unit 2 is not limited to an articulated arm type robot, and for example, may be a flying object such as an unmanned aerial vehicle (UAV, drone), a multicopter, or the like.

The arm driving part 30 includes a servo motor (not shown) and an arm position detector (not shown) as an example.

The first arm driving part 31 displaces (for example, rotates) the first arm section 21 with reference to an installation surface of the robot unit 2 using a servo motor. The first arm driving part 31 includes a first arm position detector 311. The first arm position detector 311 detects a displacement magnitude (for example, a rotation angle) of the first arm section 21 with reference to the installation surface of the robot unit 2.

The second arm driving part 32 displaces (for example, rotates) the second arm section 22 with reference to the first arm section 21 using the servo motor. The second arm driving part 32 includes a second arm position detector 321. The second arm position detector 321 detects a displacement magnitude (for example, a rotation angle) of the second arm section 22 with reference to the first arm section 21.

Further, configurations of the third arm driving part 33 to the fifth arm driving part 35 and a third arm position detector 331 to a fifth arm position detector 351 are the same as above and description thereof will be omitted.

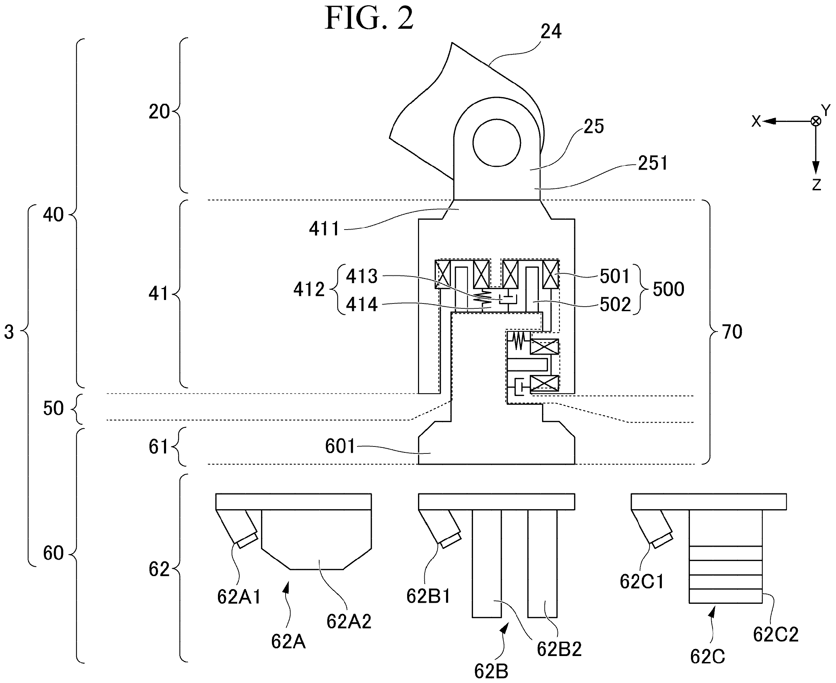

The end effector 62 has any of various shapes and functions according to the use of the robot system 1, and is attached to an end portion of the fifth arm section 25. Details of the configuration of the connecting portion between the arm section 20 and the end effector 62 will be described with reference to Fig. 2.

### [Configuration of connecting portion between arm section and end effector]

Fig. 2 is a view showing an example of a configuration of the connecting portion between the arm section 20 and the end effector 62 of the embodiment. The arm section 20 (in this example, the fifth arm section 25) and the end effector 62 are connected to each other via the support part 41, the pedestal driving part 50, and the pedestal part 61.

Further, it can be said that the arm section 20 and the pedestal-attached end effector 60 are connected to each other via the support part 41 and the pedestal driving part 50.

In the following description of the pedestal-attached end effector 60, description of the pedestal part 61 is omitted, and it may be simply described as the end effector 62. When the description of the pedestal part 61 is omitted, for example, it is described that the arm section 20 and the end effector 62 are connected to each other via the support part 41 and the pedestal driving part 50.

The end effector 62 is detachably or non-detachably connected to a pedestal end portion 601 of the pedestal part 61. The end effector 62 can work on a workpiece WK of a work object. The end effector can also be said to be a part of the robot that has a function of working directly on the work object. As an example, the end effector 62 has uses such as a multi-finger type (or a twin-finger type) hand that can grip the workpiece WK, a machining head that performs laser machining or ultrasonic machining, a camera, an injector configured to inject particles of a melted metal/resin or for blast machining, a manipulator, an air blower, or the like.

The end effector 62 has any of various shapes and functions according to the use of the robot system 1. For example, an end effector 62A includes a camera 62A1 and a laser illumination part 62A2, and has a laser cutter function of cutting the workpiece WK (not shown). In other words, the end effector 62A includes the laser illumination part 62A2 (a second illumination part) configured to irradiate the workpiece WK with processing light (for example, a laser beam) for machining the workpiece WK.

The end effector 62B includes a camera 62B1 and a hand section 62B2, and has a robot hand function of gripping and moving the workpiece WK (not shown). The end effector 62C includes a camera 62C1 and a vacuum section 62C2, and has a robot hand function of suctioning and moving the workpiece WK (not shown).

The support part 41 includes a connecting end portion 411. The connecting end portion 411 is detachably or non-detachably connected to an arm end portion 251 of the fifth arm section 25. The support part 41 has a recessed portion. The support part 41 has the connecting end portion 411 on one end side and a recessed portion on the other end side. The pedestal driving part 50 or an intermediate section 412 is disposed in the recessed portion of the support part 41.

That is, a support part 40 includes a connecting element connected to the robot unit 2. The connecting end portion 411 is provided as an example of the connecting element.

The pedestal driving part 50 (the second driving part) includes a linear motor 500, and displaces a position of the pedestal part 61 with respect to a connecting section 41. The linear motor 500 is a voice coil motor as an example, and includes a magnetic field generating section 501 and a magnetizing section 502. The magnetic field generating section 501 generates a magnetic field using a supplied driving current. The magnetizing section 502 generates a repulsive force or an attractive force using the magnetic field generated by the magnetic field generating section 501. The linear motor 500 displaces the pedestal part 61 with respect to the connecting section 41 by changing a distance between the magnetic field generating section 501 and the magnetizing section 502 using the repulsive force or the attractive force. As an example, when the repulsive force is generated between the magnetic field generating section 501 and the magnetizing section 502, a distance between the connecting section 41 and the pedestal part 61 increases. In addition, when the attractive force is generated between the magnetic field generating section 501 and the magnetizing section 502, a distance between the connecting section 41 and the pedestal part 61 decreases. The magnetic field generating section 501 is disposed on the support part 41. The magnetic field generating section 501 is disposed in a recessed portion formed in the support part 41. The magnetizing section 502 is disposed on the pedestal part 61. The magnetizing section 502 is disposed in a recessed portion formed in the pedestal part 60. While an example in which the magnetic field generating section 501 is disposed on the support part 41 and the magnetizing section 502 is disposed on the pedestal part 61 has been presented, there is no limitation thereto, and the magnetic field generating section 501 may be disposed on the pedestal part 61 and the magnetizing section 502 may be disposed on the support part 41.

The pedestal driving part 50 can be driven without having a contact (i.e., in a non-contact state) between the support part 41 and the pedestal part 61 (or the pedestal-attached end effector 60).

Further, the pedestal driving part 50 (the second driving part) does not contribute to weight support of the end effector 62. The weight of the end effector 62 is supported by the support part 40.

Here, the robot unit 2 includes an intermediate section that connects the support part 40 and the end effector 62 (or the pedestal-attached end effector 60). The intermediate section supports the weight of the end effector 62.

The intermediate section 412 supports the weight of the end effector 62. The intermediate section 412 includes, for example, a damper element 413 or a spring element 414. The intermediate section 412 includes an elastic member and reduces vibrations of the end effector 62. An elastic force of the elastic member may be adjustable. In this case, the robot unit 2 includes an adjusting section (not shown), and adjusts an elastic force of the elastic member. For example, the elastic member may be an air spring. In this case, the adjusting section (not shown) can adjust a pneumatic pressure of the air spring, and adjust the elastic force by adjusting the pneumatic pressure of the air spring.

In addition, the intermediate section 412 attenuates vibrations applied from the outside. The intermediate section 412 minimizes displacement of the end effector 62 due to the weight of the end effector 62 (or the pedestal-attached end effector 60).

The intermediate section 412 supports the end effector 62 in the direction of gravity, regardless of the posture of the end effector 62.

Further, the intermediate section 412 may include an element configured to reduce vibrations of the end effector 62 (for example, a piezo (piezoelectric) element) in addition to the elastic member.

Here, the end effector unit 3 has one end (for example, an end portion connected to the fifth arm section 25) that is a fixed end, and the other end (for example, an end portion on the side of the end effector 62) that is a free end. The robot unit 2 changes a position or a posture of the fixed end for the end effector unit 3 by driving the arm section 20. In the end effector unit 3, changes in the position or posture of the fixed end affect the position or posture of the end effector 62 that is a free end.

In general, in the robot unit 2, it is difficult to accurately control a position or posture of a tip of the arm section 20 (i.e., the fixed end for the end effector unit 3) due to an influence such as an external force of vibrations on a floor surface, the weight of the arm section 20, rigidity, a driving force of the arm driving part 30, or the like.

The robot unit 2 of the embodiment can minimize the influence of displacement of the position or posture of the tip of the arm section 20 (i.e., the fixed end for the end effector unit 3) on the position or posture of the end effector 62 by driving the pedestal driving part 50 with having no contact (i.e., in the non-contact state) between the support part 41 and the pedestal part 61 (or the pedestal-attached end effector 60).

### [Variant of configuration of connecting portion between arm section and end effector]

Various variants may be provided in the configuration of the connecting portion between the arm section 20 and the pedestal part 61 (or the pedestal-attached end effector 60). In the case in which the shape or the function of the end effector 62 is changed or the like, the end effector unit 3, the end effector 62, or the pedestal-attached end effector 60 may be replaced. When the end effector unit 3, the end effector 62, or the pedestal-attached end effector 60 is replaced, the following variants are provided depending on the difference in the configuration of the connecting portion between the arm section 20 and the end effector 62.
(1) When the arm end portion 251 and the support part 41 are detachable.
   In this case, the support part 41, the pedestal driving part 50 and the pedestal-attached end effector 60 (the pedestal part 61 and the end effector 62) are combined in advance.
   When the pedestal-attached end effector 60 is attached, the support part 41, the pedestal driving part 50 and the pedestal-attached end effector 60 in the combined state are connected to the arm end portion 251.
(2) When the support part 41 and the pedestal driving part 50 are detachable.
   In this case, the arm end portion 251 of the arm section 20 and the connecting end portion 411 of the support part 41 are combined in advance.
   When the pedestal-attached end effector 60 (the pedestal part 61 and the end effector 62) is attached, the pedestal driving part 50 and the pedestal-attached end effector 60 in the combined state are connected to the support part 41.
(3) When the pedestal part 61 and the end effector 62 are detachable.
   In this case, the arm end portion 251 of the arm section 20 and the connecting end portion 411 of the support part 41 are previously combined. In addition, the support part 41, the pedestal driving part 50 and the pedestal part 61 are combined in advance.
   When the end effector 62 is attached, the end effector 62 is connected to the support part 41, the pedestal driving part 50 and the pedestal part 61 in the combined state.
(4) When the arm end portion 251 and the support part 41 are detachable and the pedestal part 61 and the end effector 62 are detachable.
   In this case, the support part 41, the pedestal driving part 50, and the pedestal part 61 are combined in advance.
   When the end effector 62 is attached, the end effector 62 is connected to the support part 41, the pedestal driving part 50, and the pedestal part 61 in the combined state. Further, the support part 41, the pedestal driving part 50, and the pedestal-attached end effector 60 (the pedestal part 61 and the end effector 62) in the combined state are connected to the arm end portion 251.

Further, in the following description, the arm section 20 and the support part 41 are also generally referred to as the support part-attached arm section 40. For example, in the case of the above-mentioned (2), when the pedestal-attached end effector 60 is attached, the pedestal driving part 50 and the pedestal-attached end effector 60 (the pedestal part 61 and the end effector 62) in the combined state are connected to the support part-attached arm section 40.

Like the robot unit 2 of the embodiment, when the arm section 20 is an articulated arm, the support part-attached arm section 40 is the entirety or a part of the articulated arm.

Further, the part of the arm section 20 and the support part 41 can also be considered to function as a support part.

The support part 41 supports the end effector 62 (or the pedestal-attached end effector 60) in a state in which the end effector 62 (or the pedestal-attached end effector 60) can be displaced.

As described above, the support part 41 is driven by the arm driving part 30 (a first driving part). That is, the arm driving part 30 (the first driving part) can drive the end effector 62 (or the pedestal-attached end effector 60) via the support part 41.

In addition, the pedestal driving part 50 (a second driving part) is disposed between the support part 41 and the end effector 62 (or the pedestal-attached end effector 60), and drives the end effector 62 (or the pedestal-attached end effector 60) with respect to the support part 41 based on the position of the end effector 62 (or the pedestal-attached end effector 60) detected by the detector 200.

Further, in the description of the embodiment, driving the end effector 62 also includes driving the pedestal-attached end effector 60. In addition, displacing the end effector 62 also includes displacing the pedestal-attached end effector 60.

Here, a magnitude of the displacement when the arm driving part 30 drives the end effector 62 is also referred to as a first stroke. In addition, a magnitude of the displacement when the pedestal driving part 50 drives the end effector 62 is also referred to as a second stroke. The magnitude of the displacement when the pedestal driving part 50 drives the end effector 62 is smaller than the magnitude of the displacement when the arm driving part 30 drives the end effector 62. That is, the second stroke is smaller than the first stroke.

In other words, the arm driving part 30 (the first driving part) can drive the end effector 62 via the support part 41 with the first stroke. In addition, the pedestal driving part 50 (the second driving part) can drive the end effector 62 with respect to the support part 41 by the second stroke that is smaller than the first stroke.

Further, the stroke described herein can also represent a moving range, a moving width, a length of a moving trajectory, a movable range, or the like of the end effector 62.

Further, as described above, the arm section 20 of the embodiment includes five arms (for example, the first arm section 21 to the fifth arm section 25), and can drive the support part 41 in directions of six degrees of freedom with respect to the grounding surface of the first arm section 21. In other words, the arm driving part 30 (the first driving part) can drive the end effector 62 via the support part 41 with the first stroke in the directions of six degrees of freedom.

In addition, in the following description, the support part 41, the pedestal driving part 50 and the pedestal part 61 are also generally referred to as an adapter 70. For example, in the case of the above-mentioned (4), when the end effector 62 is attached, the end effector 62 is connected to the adapter 70 (i.e., the support part 41, the pedestal driving part 50, and the pedestal part 61 in the combined state). Further, the adapter 70 and the end effector 62 are connected to the arm end portion 251.

For example, the adapter 70 includes the support part (for example, the support part 41) having the first connecting element (for example, the connecting end portion 411) that can be connected to the robot unit 2 and configured to support the end effector 62 in a state in which the end effector 62 can be displaced, the pedestal part 61 having the second connecting element (for example, the pedestal end portion 601) that can be connected to the end effector 62, and the pedestal driving part 50 disposed between the support part (for example, the support part 41) and the pedestal part 61 and configured to electromagnetically drive the end effector 62 with respect to the support part (for example, the support part 41) via the pedestal part 61.

The adapter 70 may have the intermediate section 412. The intermediate member 412 is disposed between the support part 41 and the pedestal part 61.

### [Disposition example of linear motor]

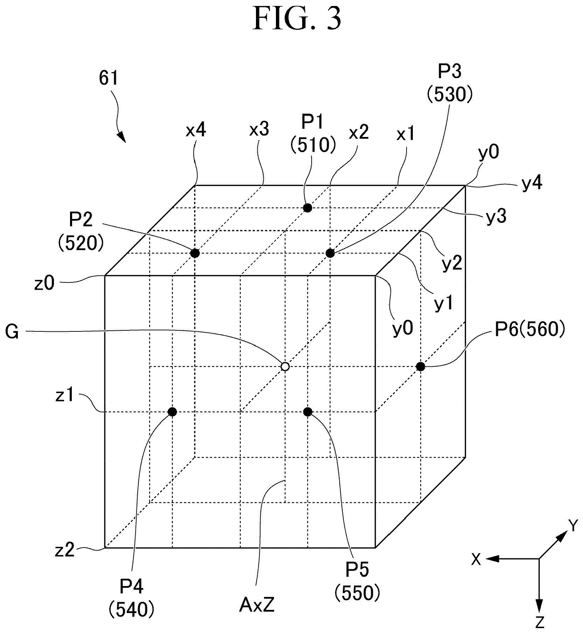

A disposition example of the linear motor 500 in the pedestal driving part 50 will be described with reference to Fig. 3.

Fig. 3 is a view showing an example of disposition of the linear motor 500 of the embodiment. In one example, the pedestal driving part 50 includes six linear motors 500. A three-dimensional orthogonal coordinate system of an X axis, a Y axis and a Z axis is used when necessary in the following description as a coordinate system of the adapter 70 (or the connecting section 41 and the pedestal part 61). Here, the Z axis is an axis that connects the end effector 62 and the workpiece WK that is a work object of the end effector 62.

In the pedestal driving part 50, the linear motors 500 (a first linear motor 510, a second linear motor 520 and a third linear motor 530) are disposed at each of 3 points on an XY plane of the pedestal part 61. In the pedestal driving part 50, the linear motors 500 (a fourth linear motor 540 and a fifth linear motor 550) are disposed at 2 points (a point P4 and a point P5) on the XZ plane of the pedestal part 61. In addition, in the pedestal driving part 50, the linear motor 500 (a sixth linear motor 560) is disposed at 1 point on the YZ plane of the pedestal part 61.

Here, disposition of the linear motor 500 when coordinates of a center of gravity G of the pedestal part 61 are (x2, y2, z1) will be more specifically described.

The first linear motor 510, the second linear motor 520 and the third linear motor 530 may be disposed at vertexes of a triangular shape (for example, an equilateral triangular shape) on the XY plane about an axis in the Z-axis direction (a center of gravity axis AxZ in the Z direction) passing through the center of gravity G of the pedestal part 61. For example, the first linear motor 510 is disposed at a point P1 (x2, y3, z0), the second linear motor 520 is disposed at a point P2 (x3, y1, z0), and the third linear motor 530 is disposed at a point P3 (x1, y1, z0).

The fourth linear motor 540 and the fifth linear motor 550 may be disposed at opposite positions while having the axis in the Y-axis direction (a center of gravity axis AxY in the Y direction) passing through the center of gravity G of the pedestal part 61 in the XZ plane being interposed therebetween. For example, the fourth linear motor 540 is disposed at a point P4 (x3, y0, z1) and the fifth linear motor 550 is disposed at a point P5 (x1, y0, z1).

The sixth linear motor 560 may be disposed at a position on the axis in the X-axis direction (a center of gravity axis AxX in the X direction) passing through the center of gravity G of the pedestal part 61. For example, the sixth linear motor 560 is disposed at a point P6 (x0, y2, z1).

Further, "the linear motor 500 is disposed at the point P" includes the meaning that "the linear motor 500 is disposed at a position at which a force generated by the linear motor 500 is applied to a point P."

### [Driving example of linear motor]

The pedestal driving part 50 displaces a position of the pedestal part 61 with respect to the connecting section 41 by causing the linear motor 500 to generate the same repulsive force (or attractive force). Displacement of at least 1 degree of freedom may be provided in displacement of the pedestal part 61 by the pedestal driving part 50. The pedestal driving part 50 reduces vibrations generated in the end effector 62 (or the pedestal-attached end effector 60).

Further, when the six linear motors 500 are disposed as described above, the pedestal driving part 50 can provide displacement of 3 degrees of freedom in the X, Y and Z-axis direction and 3 degrees of freedom around the X, Y and Z axes, for a total of 6 degrees of freedom, to the pedestal part 61. That is, the pedestal driving part 50 can electromagnetically drive the end effector 62 with respect to the support part 41 in the directions of six degrees of freedom.

The above-mentioned intermediate section 412 can support the end effector 62 in the directions of six degrees of freedom. More specifically, the intermediate section 412 has six support elements, adjusts distribution of a supporting force between the six support elements, and can support the end effector 62 in the directions of six degrees of freedom of a first direction that is the direction of gravity, a second direction perpendicular to the first direction, a third direction perpendicular to the first direction and the second direction, a fourth direction axially around the first direction, a fifth direction axially around the second direction, and a sixth direction axially around the third direction.

In this case, the intermediate section 412 can support the end effector 62 using different support elements of the six support elements according to the posture of the end effector 62.

Specifically, the intermediate section 412 has a first support element configured to support at least a part of the weight of the end effector 62 in the direction of gravity when the end effector 62 is in the first posture, and a second support element configured to support at least a part of the weight of the end effector 62 in the direction of gravity when the end effector 62 is in the second posture different from the first posture.

While the example in which the intermediate section 412 has the six support elements has been exemplarily described, there is no limitation thereto, and for example, a configuration having the three support elements may be provided. The number of the support elements of the intermediate section 412 may be one or plural.

The number of the support elements included in the intermediate section 412 may be equal to or different from the number of the driving elements (for example, the linear motors 500) included in the pedestal driving part 50. The number of the support elements included in the intermediate section 412 may be smaller than or greater than the number of the driving elements included in the pedestal driving part 50.

The intermediate section 412 is disposed between the recessed portion formed in one of the support part 41 and the pedestal-attached end effector 60 (or the pedestal part 61) and the protrusion portion inserted into the recessed portion and formed on the other one of the support part 41 and the pedestal-attached end effector 60 (or the pedestal part 61).

In this case, the pedestal driving part 50 (the second driving part) is disposed between the recessed portion and the protrusion portion.

Hereinafter, specific examples in which the end effector 62 is displaced in each direction will be described.

### (1) Displacement in X-axis direction

The pedestal driving part 50 drives the sixth linear motor 560 and applies a displacement force to a point P6 (x0, y2, z1) of the pedestal part 61. As a result, the pedestal part 61 is displaced in the X-axis direction.

### (2) Displacement in Y-axis direction

The pedestal driving part 50 simultaneously drives the fourth linear motor 540 and the fifth linear motor 550 the same amount and applies a displacement force to the point P4 (x3, y0, z1) and the point P5 (x1, y0, z1). As a result, the pedestal part 61 is displaced in the Y-axis direction.

### (3) Displacement in Z-axis direction

The pedestal driving part 50, the first linear motor 510, the second linear motor 520, and the third linear motor 530 are simultaneously driven the same amount and apply displacement forces to the point P1 (x2, y3, z0), the point P2 (x3, y1, z0), and the point P3 (x1, y1, z0). As a result, the pedestal part 61 is displaced in the Z-axis direction. That is, the pedestal driving part 50 can drive the end effector 62 in the plane (for example, the XY plane) perpendicular to the axis (for example, the Z axis) direction in which the end effector 62 and the workpiece WK are connected.

### (4) Displacement around X axis

The pedestal driving part 50 simultaneously drives the second linear motor 520 and the third linear motor 530 the same amount without driving the first linear motor 510, and applies a displacement force to the point P2 (x3, y1, z0) and the point P3 (x1, y1, z0) while not applying the displacement force to the point P1 (x2, y3, z0). As a result, the pedestal part 61 is displaced around the X axis.

Further, the pedestal driving part 50 may drive the first linear motor 510 to displace the first linear motor 510 in a direction opposite to the displacement direction of the second linear motor 520 and the third linear motor 530.

### (5) Displacement around Y axis

The pedestal driving part 50 drives either the second linear motor 520 or the third linear motor 530 and applies a displacement force to the point P2 (x3, y1, z0) or the point P3 (x1, y1, z0). As a result, the pedestal part 61 is displaced around the Y axis.

Further, the pedestal driving part 50 may drive the second linear motor 520 and the third linear motor 530 in opposite directions.

### (6) Displacement around Z axis

The pedestal driving part 50 drives either the fourth linear motor 540 or the fifth linear motor 550 and applies a displacement force to the point P4 (x3, y0, z1) or the point P5 (x1, y0, z1). As a result, the pedestal part 61 is displaced around the Z axis.

Further, the pedestal driving part 50 may drive the fourth linear motor 540 or the fifth linear motor 550 in opposite directions.

As described above, the pedestal driving part 50 (the second driving part) can change the posture of the end effector 62.

For example, the pedestal driving part 50 (the second driving part) can change the posture of the end effector 62 in the above-mentioned directions of six degrees of freedom.

More specifically, the pedestal driving part 50 (the second driving part) has the six driving elements (for example, the linear motors 500), and can adjust the driving forces between the six driving elements and drive the end effector 62 with respect to the support part 41 in the directions of six degrees of freedom of the first direction that is the direction of gravity, the second direction perpendicular to the first direction, the third direction perpendicular to the first direction and the second direction, the fourth direction axially around the first direction, the fifth direction axially around the second direction, and the sixth direction axially around the third direction.

### [Position detection of end effector]

A specific example of position detection of the end effector 62 by the detector 200 will be described. Further, in the description of the embodiment, detecting the position of the end effector 62 also includes detecting the position of the pedestal-attached end effector 60.

In driving of the end effector 62 by the pedestal driving part 50, a displacement magnitude of the end effector 62 is determined through, for example, position feedback of the end effector 62. The position feedback of the end effector 62 is performed based on a deviation between the target position of the end effector 62 and the current position of the end effector 62. Hereinafter, a means configured to detect the current position of the end effector 62 will be described.

### [(1) Position detection by external sensor (laser tracker)]

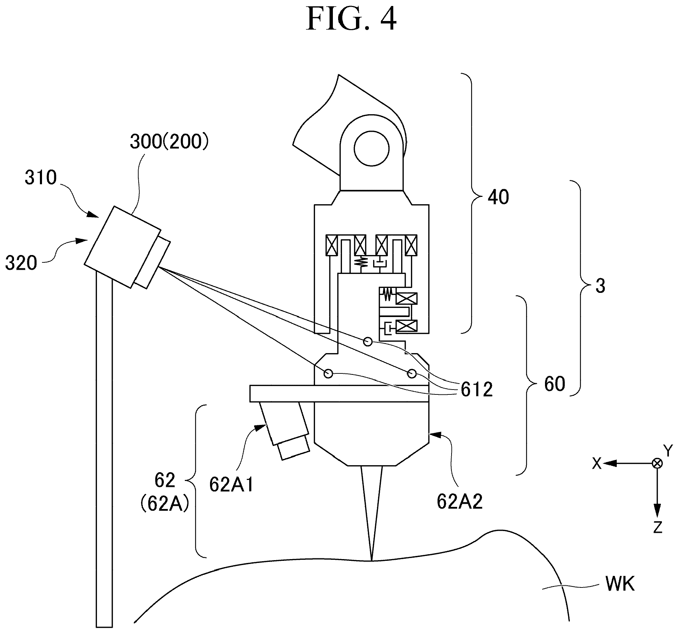

Fig. 4 is a view showing an example of position detection of the end effector 62 of the embodiment. The end effector 62A includes a camera 62A1 and a laser illumination part 62A2, as an example, and has a laser cutter function of cutting the workpiece WK at a previously determined position.

In the example, the robot system 1 includes a laser tracker 300 as the above-mentioned detector 200. The laser tracker 300 includes an illumination part 310 and a light receiving section 320. The detector 200 detects position information of the end effector 62A, and outputs the detected position information of the end effector 62A to the controller 10 as information for control of the cutting position of the workpiece WK by the laser illumination part 62A2.

The illumination part 310 radiates tracking light (for example, a laser beam) to the end effector 62 (or the pedestal-attached end effector 60, which also applies for the rest of this paragraph). As an example, the illumination part 310 periodically changes a radiation direction of tracking light (for example, a laser beam) using a known method (for example, a galvanometer mirror) and scans the inside of the measurement space. Even when a position or a posture of the end effector 62 or both are changed by scanning in the space, the illumination part 310 can radiate the tracking light to the end effector 62 according to the change.

The light receiving section 320 receives the reflected light obtained by reflecting the tracking light radiated from the illumination part 310 using the end effector 62.

The laser tracker 300 detects the position of the end effector 62 based on the light reception result by the light receiving section 320.

As an example, the detector 200 detects position information of the end effector 62 while the processing light from the laser illumination part 62A2 (the second illumination part) is radiated to the workpiece WK.

The robot system 1 is operated based on a prescribed machining route and the position information detected by the detector 200. The machining route is stored in, for example, a storage (not shown). Specifically, the arm section 20 (the first driving part) drives the end effector 62 via the support part 41. The support part 41 supports the end effector 62 in the direction of gravity. The pedestal driving part 50 (the second driving part) drives the end effector 62 in a non-contact state in a direction perpendicular to the radiation direction in which the processing light is radiated.

Further, the robot system 1 may include an acceleration sensor (not shown) configured to detect acceleration information of the end effector 62. In this case, the pedestal driving part 50 (the second driving part) drives the end effector 62 in a non-contact state in a direction perpendicular to the radiation direction based on the machining route, the position information detected by the detector 200, and the acceleration information detected by the acceleration sensor (not shown).

In addition, the robot system 1 may include a position sensor (not shown) disposed between the support part 41 and the end effector 62 and configured to detect relative position information between the support part 41 and the end effector 62. In this case, the pedestal driving part 50 (the second driving part) drives the end effector 62 in a non-contact state in a direction perpendicular to the radiation direction based on the machining route, the position information detected by the detector 200, the acceleration information detected by the acceleration sensor (not shown), and the relative position information detected by the position sensor (not shown).

Here, various known method can be applied to the position detection of the end effector 62 by the laser tracker 300.

For example, the laser tracker 300 may detect the position information of the end effector 62 based on the distance measurement result by a time of flight (TOF) method based on the difference between the radiation timing by the illumination part 310 and the light reception timing by the light receiving section 320.

In addition, the laser tracker 300 may detect the position information of the end effector 62 by obtaining a geometric positional relation in a manner of triangulation based on the measurement result of the reflecting position of the reflected light generated by radiating the tracking light of a plurality of optical paths from the illumination part 310. In this case, in order to increase measurement accuracy of the reflecting position of the reflected light, a variable focal lens (for example, a zoom lens) may be used in a light reception optical system of the light receiving section 320.

In addition, in the position detection of the end effector 62 by the laser tracker 300, a distance measuring means using an optical frequency comb with a light pulse of an extremely short time may be applied.

In addition, the robot system 1 may include a reflector 612 on the end effector 62 (or the pedestal-attached end effector 60, which also applies for the rest of this paragraph). The reflector 612 is formed of, for example, a retro-reflecting material, and reflects tracking light (for example, a laser beam) radiated from the illumination part 310.

In this case, the laser tracker 300 detects position information of the end effector 62 by acquiring the 3-dimensional position information of the reflector 612 based on the light reception result by the light receiving section 320.

Further, here, while it has been described that the detector 200 is the laser tracker 300 and position (or posture) detection by light is performed, there is no limitation thereto. For example, the detector 200 may detect the position (or posture) using sound such as ultrasonic waves or the like, or radio waves.

### [(2) Position detection by external sensor (camera)]

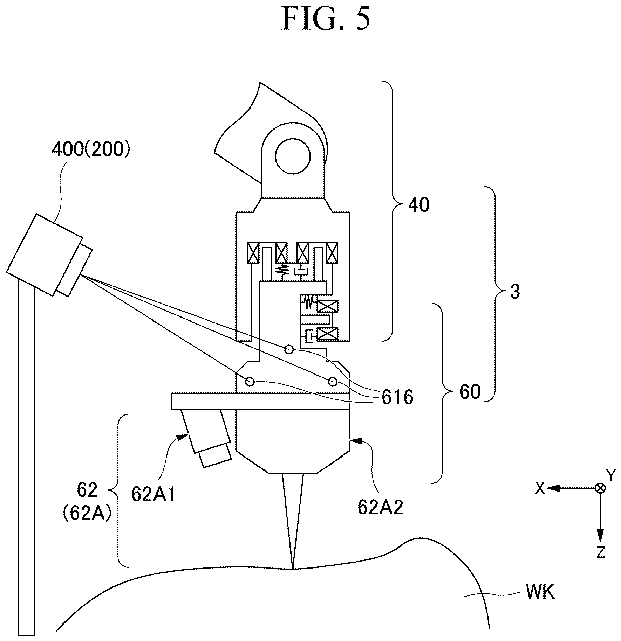

Fig. 5 is a view showing another example of the position detection of the end effector 62 of the embodiment. In this example, the robot system 1 includes an imaging part 400 as the above-mentioned detector 200. The imaging part 400 generates image data by imaging the end effector 62. The imaging part 400 detects the position of the end effector 62 based on the generated image data.

In addition, the robot system 1 may include a light emitting section 616 on the end effector 62 (or the pedestal-attached end effector 60, which also applies for the rest of this paragraph). The light emitting section 616 includes, for example, an infrared ray LED, which emits light by itself. In this case, the imaging part 400 includes, for example, an infrared ray camera, and is configured such that an infrared ray wavelength can be imaged. The imaging part 400 detects position information of the end effector 62 by acquiring 3-dimensional position information of the light emitting section 616 based on the image data imaged by the light emitting section 616 using the infrared ray camera.

### [Disposition example of external sensor]

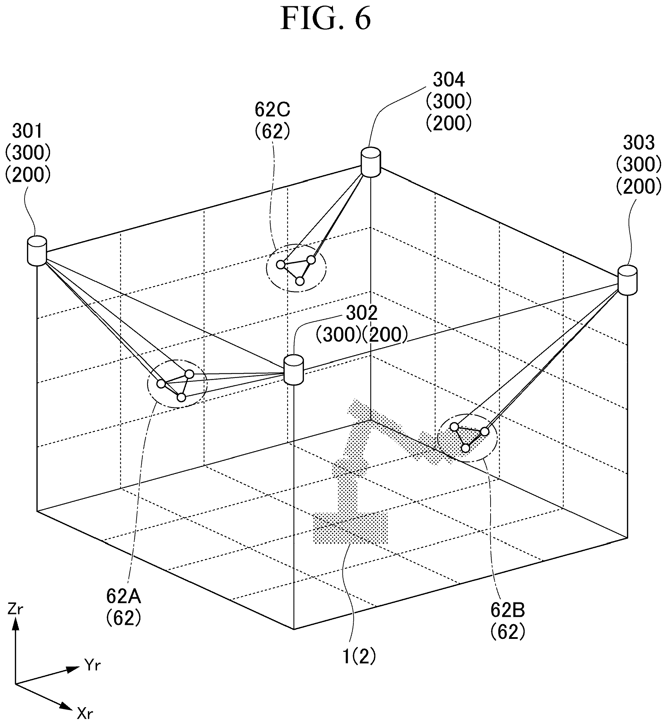

Fig. 6 is a view showing an example of disposition of the detector 200 of the embodiment. Here, the detector 200 means, for example, a portion including the illumination part 310 and the light receiving section 320, or a portion including the camera of the imaging part 400, i.e., a measurement head. In addition, disposition of the detector 200 means disposition of the measurement head. As an example of the detector 200, the laser trackers 300 or the imaging parts 400 are disposed at a plurality of places (for example, four places) in the space in which the robot unit 2 is installed. When there is a necessity in the following description, a three-dimensional orthogonal coordinates system of an Xr axis, a Yr axis and a Zr axis is used as a coordinates system showing coordinates in the space in which the robot unit 2 is installed.

The detector 200 (the laser tracker 300 or the imaging part 400) detects a position or a posture of the end effector 62 by detecting a relative position between the disposition position in the space and the end effector 62 of the robot unit 2 (or the pedestal-attached end effector 60, the same as in the following description in this paragraph).

In the example shown in the same drawing, the four laser trackers 300 (a laser tracker 301 to a laser tracker 304) are disposed. In the example, the laser tracker 301 and the laser tracker 302 use the end effector 62A as a detection object, the laser tracker 303 uses the end effector 62B as a detection object, and the laser tracker 304 uses the end effector 62B as a detection object.

### [Disposition example (variant) of external sensor]

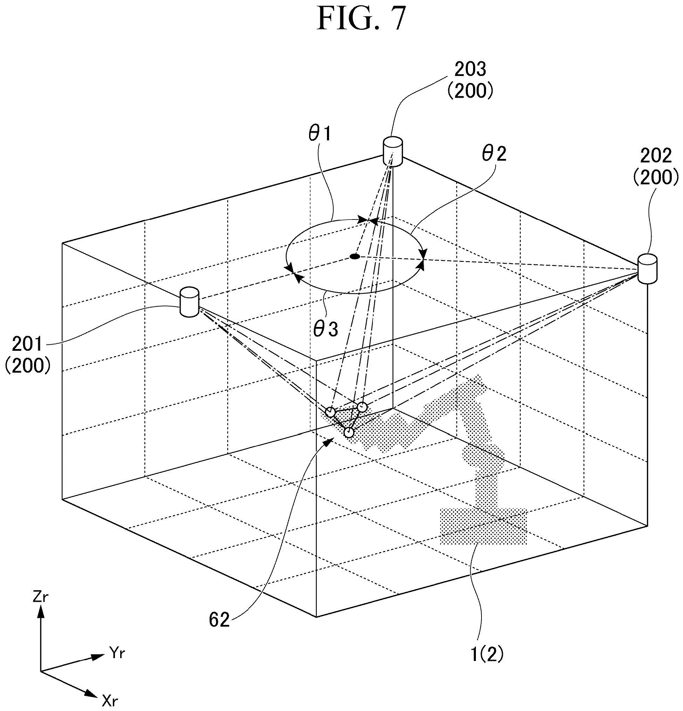

Fig. 7 is a view showing another example of disposition of the detector 200 of the embodiment. As described above, the detector 200 may be disposed at only one place or may be disposed at a plurality of places in the space in which the robot unit 2 is installed. In this example, the detector 200 (a detector 201 to a detector 203) is disposed at a plurality of places (for example, 3 places) in the space in which the robot unit 2 is disposed. The detector 201 to the detector 203 may be disposed on an Xr-Yr plane in the space at equal intervals. For example, the detector 201 to the detector 203 are disposed at vertexes of an equilateral triangular shape on the Xr-Yr plane in the space. In this case, each of an angle θ1 formed between the position of the detector 201 and the position of the detector 202, and an angle θ2 formed between the position of the detector 202 and the position of the detector 203, and an angle θ3 formed between the position of the detector 203 and the position of the detector 201 is 120°. In this way, even when the position (or the posture or both) of the end effector 62 is changed as the detector 200 is disposed, it is possible to reduce positioning of the end effector 62 (or the pedestal part 61 or the pedestal-attached end effector 60) at a dead angle of the detector 200.

As described above, according to the robot system 1 constituted by the three detectors 200, when displacement of 1 degree of freedom is detected by the one detector 200 (the measurement head), displacement of 3 degrees of freedom can be detected in the detector 200 as a whole, and when displacement of 2 degrees of freedom is detected by the one detector 200 (the measurement head), displacement of 6 degrees of freedom can be detected in the detector 200 as a whole.

In addition, each of the detectors 200 may use the same portion (region) of the robot unit 2 as a detection object or may use different portions (regions) as a detection object. When each of the detectors 200 uses the different portions (regions) as the detection object, for example, the detector 201 uses a left side surface of the end effector 62 (or the pedestal part 61 or the pedestal-attached end effector 60) as a detection object, the detector 202 uses a right side surface of the end effector 62 (or the pedestal part 61 or the pedestal-attached end effector 60) as a detection object, and the detector 203 uses a front surface of the end effector 62 (or the pedestal part 61 or the pedestal-attached end effector 60) as a detection object.

Further, each of the detectors 200 may change the position of the detection object according to a variation of the position (or the posture or both) of the end effector 62. For example, according to a variation in the position (or the posture or both) of the end effector 62, the detector 201 changes the position of each of the detection objects from a left side surface to a front surface of the end effector 62 (or the pedestal part 61 or the pedestal-attached end effector 60), the detector 202 changes the position of each of the detection objects from a right side surface to a left side surface of the end effector 62 (or the pedestal part 61 or the pedestal-attached end effector 60), and the detector 203 changes the position of each of the detection objects from a front surface to a right side surface of the end effector 62 (or the pedestal part 61 or the pedestal-attached end effector 60).

Further, disposition of the detectors 200 shown herein is an example, and for example, a configuration in which the four detectors 200 are provided and the detectors 200 are disposed at positions of vertexes of a regular tetrahedron in the space in which the robot unit 2 is installed may be provided.

### [Variant (feature point servo type) of detection method of detector 200]

So far, while the example in which the detector 200 (for example, the laser tracker 300 or the imaging part 400) detects the position (or the posture or both) of the end effector 62 by setting the reflector 612 or the light emitting section 616 disposed in the end effector unit 3 as the position of the detection object has been described, there is no limitation thereto. The detector 200 may detect the position (or the posture or both) of the end effector 62 by setting feature portions (feature points) of the appearance of the end effector 62 (or the pedestal part 61 or the pedestal-attached end effector 60) as the position of the detection object. Here, a method of controlling the position (or posture) of the end effector 62 based on the position of the feature point detected by the detector 200 is also referred to as a feature point servo method.

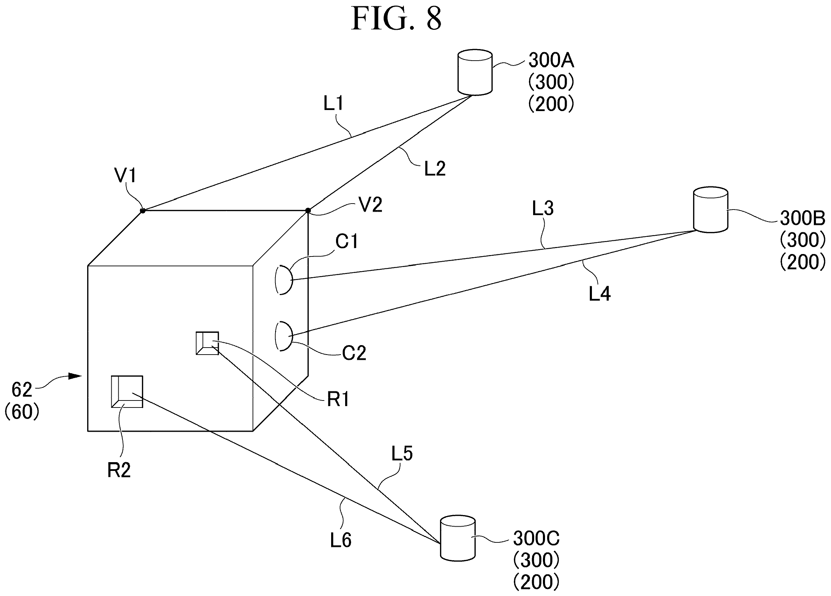

Fig. 8 is a view showing an example of a detection method of the detector 200 of the embodiment.

In the feature point servo method, among the appearance of the end effector 62 (or the pedestal part 61 or the pedestal-attached end effector 60), an angle (a vertex), a protrusion (a protrusion portion), a dimple (a recessed portion), a step difference, a boundary, a pattern, and the like, may be provided as feature points. Among the appearance of the end effector 62, which one should be the feature point may be determined in advance, or may be determined by learning or the like during the operation of the robot system 1.

As an example, a laser tracker 300A sets a vertex V1 and a vertex V2 of the end effector 62 (or the pedestal part 61 or the pedestal-attached end effector 60) as positions of the detection object. A laser tracker 300B sets a protrusion portion C1 and a protrusion portion C2 of the end effector 62 (or the pedestal part 61 or the pedestal-attached end effector 60) as positions of the detection object. The laser tracker 300C sets a recessed portion R1 and a recessed portion R2 of the end effector 62 (or the pedestal part 61 or the pedestal-attached end effector 60) as positions of the detection object.

Each of the laser trackers 300 scans feature points with tracking light (for example, laser beam). The laser tracker 300 includes a known scanning means (for example, a galvanometer mirror), changes a scanned state (for example, a vibration state of the galvanometer mirror) for each feature point of the detection object, and radiates tracking light. As an example, the laser tracker 300 sets a scan state to line scan for a certain feature point (for example, the vertex V1 and the vertex V2), and sets a scan state to triangle scan for another feature point (for example, the protrusion portion C1 and the protrusion portion C2).

The laser tracker 300 extracts a feature point through scanning of the tracking light, and detects a change of the position (or the posture or both) of the extracted feature point as the position (or the posture) of the feature point of the end effector 62 (or the pedestal part 61 or the pedestal-attached end effector 60). Here, the laser tracker 300 may be configured to scan a previously determined space range around the feature point without scanning the entire appearance of the end effector 62 (or the pedestal part 61 or the pedestal-attached end effector 60). According to the laser tracker 300 configured as above, in comparison with the case in which the entire appearance of the end effector 62 (or the pedestal part 61 or the pedestal-attached end effector 60) is scanned, since the scan range is narrowed, the scanning period can be increased, and displacement of the end effector 62 can be followed faster.

In addition, the laser tracker 300 may infer the position (or the posture or both) of the end effector 62 based on the displacement speed, the target position, or the like, of the end effector 62 (or the pedestal part 61 or the pedestal-attached end effector 60). In this case, the laser tracker 300 determines a scan range of the tracking light based on the inferred position (or the posture or both).

Further, in the case of the feature point servo type, even when the position of the detection object seen from the detector 200 is a dead angle due to the change of the position (or the posture or both) of the end effector 62 (or the pedestal part 61 or the pedestal-attached end effector 60), it is possible to continue detection of the position (or the posture or both) of the end effector 62 (or the pedestal part 61 or the pedestal-attached end effector 60) by setting another feature point that does not reach the dead angle as the position of the detection object. For this reason, in the case of the feature point servo type, a configuration that detects by the detectors 200 disposed at the plurality of positions, or a configuration that detects by a single detector 200 may be employed.

### [(3) Position detection (vision servo) by end effector-mounted sensor]

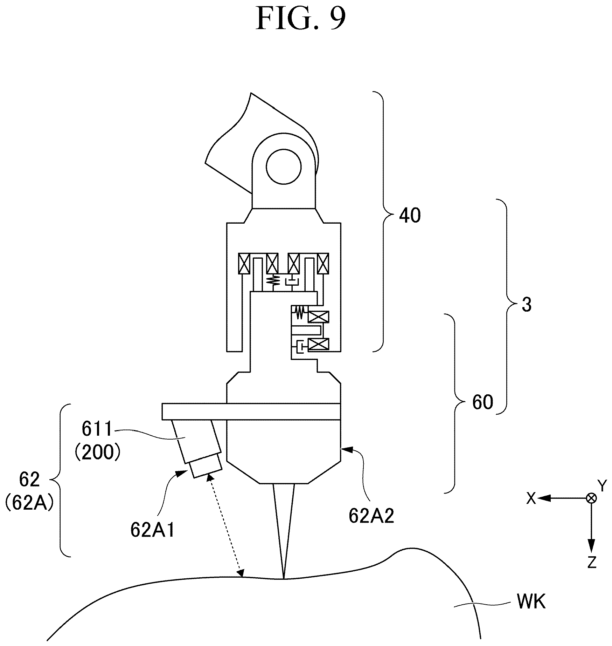

Fig. 9 is a view showing another example of disposition of the detector 200 of the embodiment. In the case of the example, the end effector 62 includes a position detector 611 as the above-mentioned detector 200. The position detector 611 includes, for example, a stereo camera (not shown), and detects a relative position between the end effector 62 and the workpiece WK. That is, the position detector 611 (the second detector) detects the position of the workpiece WK.

Further, even any of the above-mentioned configurations, the detector 200 may be configured to detect a posture of the end effector 62, in addition to the position of the end effector 62. That is, the detector 200 detects the position and the posture of the end effector 62. The detector 200 outputs the position information showing the detected position of the end effector 62 and the posture information showing the posture of the end effector 62 to the controller 10.

### [Specific example of configuration of end effector]

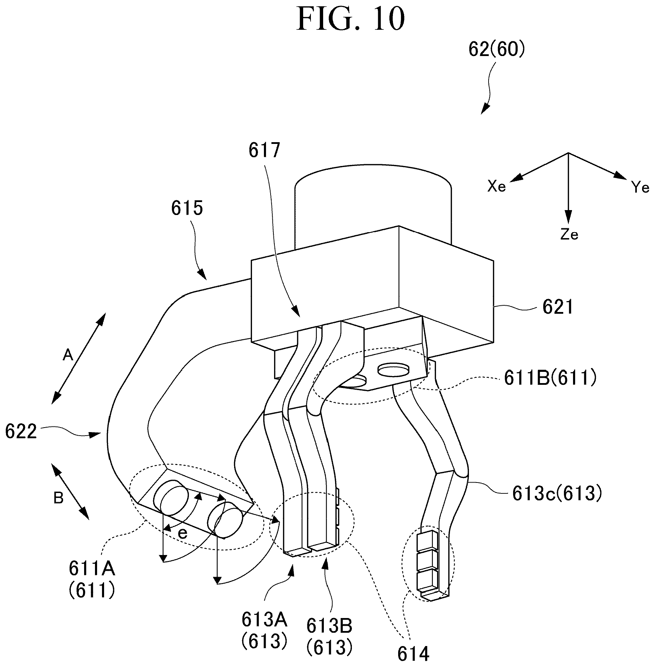

A specific example of the configuration of the end effector 62 included in the position detector 611 will be described with reference to Fig. 10 to Fig. 13.

Fig. 8 is a perspective view showing an example of an external configuration of the end effector 62 of the embodiment.

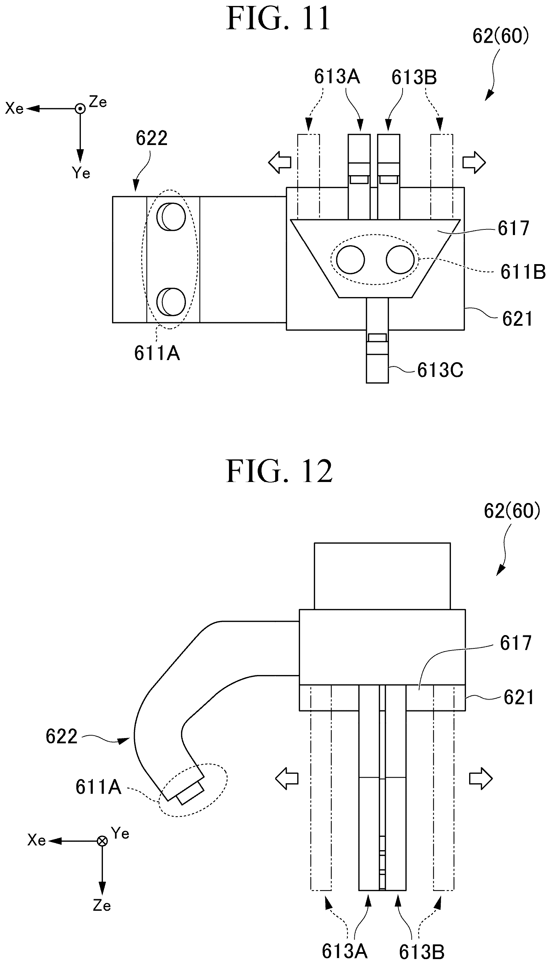

Fig. 11 is a bottom view showing an example of the external configuration of the end effector 62 of the embodiment.

Fig. 12 is a side view showing an example of the external configuration of the end effector 62 of the embodiment.

Further, a three-dimensional orthogonal coordinates system of an Xe axis, a Ye axis and a Ze axis is used as a coordinates system showing positions of the respective parts of the end effector 62 (or the pedestal-attached end effector 60) when necessary in the following description.

The end effector 62 includes the position detector 611, a hand section 613, a touch sensor 614, and a camera driving part 615.

The hand section 613 includes a first hand 613A, a second hand 613B and a third hand 613C, each of which is attached to a hand base section 621. The first hand 613A and the second hand 613B are driven by a hand driving part 617 to slide in the Xe-axis direction. The first hand 613A and the second hand 613B can be opened and closed according to a size of the gripping object (for example, the workpiece WK). The third hand 613C is not displaced in the Xe-axis direction.

The touch sensor 614 is provided on a tip portion of the hand section 613, and detects a pressure applied to the hand section 613 when the workpiece WK is gripped. The touch sensor 614 is preferably a 3-axis force sensor that can detect a pressure applied in each of the directions of the Xe axis, the Ye axis and the Ze axis.

The position detector 611 can detect a position of the workpiece WK. The position detector 611 includes a first stereo camera 611A and a second stereo camera 611B.

Further, in the example, while the position detector 611 is described as detecting a position based on the optical information by the camera, there is no limitation thereto. For example, the position detector 611 may detect the position using a radio wave sensor such as an ultrasonic wave sensor, a sonar sensor, radar, or the like, a magnetic sensor, a capacitance sensor, or the like.

The first stereo camera 611A has an imaging light axis in a direction crossing the Ze axis, and images a tip portion of the hand section 613. The first stereo camera 611A can acquire depth information in the vicinity of the tip portion of the hand section 613. Further, the first stereo camera 611A may be constituted by a time of flight (TOF) sensor.

The first stereo camera 611A is attached to a tip portion of a camera arm section 622. The camera arm section 622 is attached to the hand base section 621, is driven by the camera driving part 615 (a third driving part), and can be displaced in an A direction or a B direction in the drawing. The first stereo camera 611A can change the imaging direction of the tip portion of the hand section 613 as the camera arm section 622 is driven by the camera driving part 615.

That is, the end effector 62 includes the camera driving part 615 (a third driving part) driven to change an orientation of the first stereo camera 611A (a second detector).

Further, the camera arm section 622 may be configured such that the imaging direction of the first stereo camera 611A can be displaced in an angle θ direction in the drawing. Even in this case, the camera driving part 615 (a third driving part) is driven to change an orientation of the first stereo camera 611A (a second detector).

The second stereo camera 611B has an imaging light axis in the tip direction of the hand section 613, i.e., the Ze-axis direction from the hand base section 621, and images the tip portion of the hand section 613. The second stereo camera 611B has a function as a palm built-in vision, and can acquire an image from an upper surface of the workpiece WK.

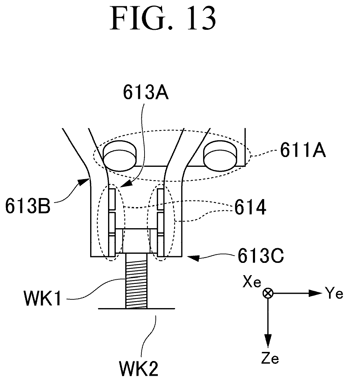

Fig. 13 is a view showing an example of a state in which the hand section 613 of the end effector 62 of the embodiment grips the workpiece WK.

The position detector 611 acquires depth information of a workpiece WK1 (for example, a screw) gripped by the hand section 613 and a workpiece WK2 (for example, a screw hole) in the vicinity thereof using the first stereo camera 611A and the second stereo camera 611B. The position detector 611 calculates a three-dimensional shape of the workpiece WK (for example, the workpiece WK1 and the workpiece WK2) based on the acquired depth information. The position detector 611 adjusts the position or the posture of the hand section 613 based on the calculated three-dimensional shape of the workpiece WK. For example, the position detector 611 performs eccentricity adjustment of the hand section 613 (for example, displacement adjustment of the hand section 613 in an Xe-Ye plane) and inclination adjustment of the hand section 613 (for example, inclination adjustment of the Ze axis with respect to the workpiece WK2). In addition, the position detector 611 calculates a distance between the workpieces (for example, a distance between the workpiece WK1 and the workpiece WK2 in the Ze-axis direction).

In addition, the position detector 611 can also perform edge extraction of the image of the workpiece WK, and in this case, can improve accuracy of three-dimensional information of the workpiece WK.

### [Functional configuration of controller]

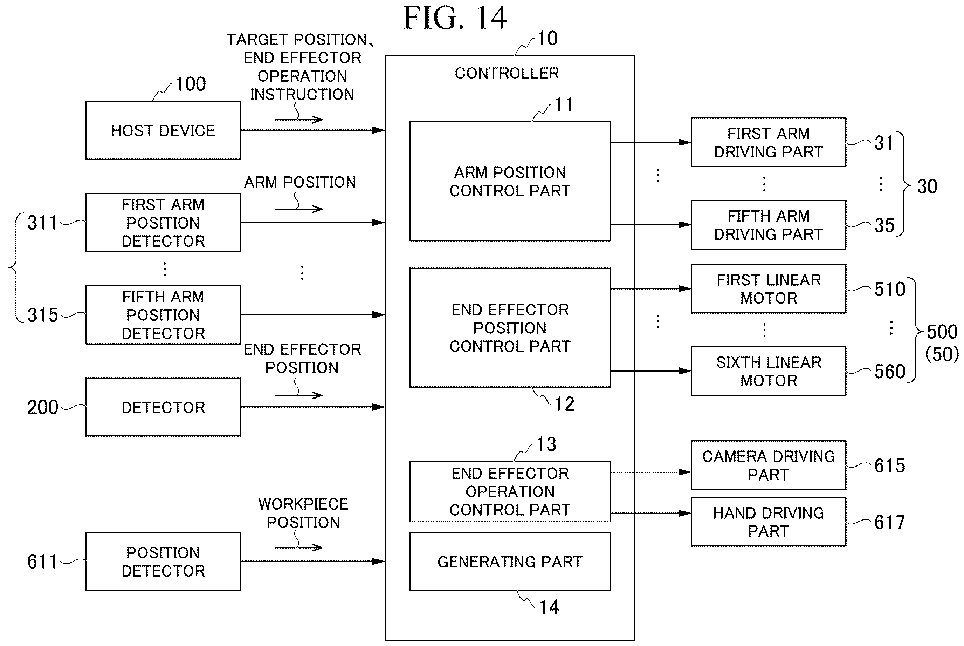

Fig. 14 is a view showing an example of a functional configuration of the controller 10 of the embodiment. The controller 10 includes an arm position control part 11, an end effector position control part 12, an end effector operation control part 13, and a generating part 14.

The arm position control part 11 controls the arm driving part 30 based on the target position given from a host device 100 and the current position of the arm section 20 detected by an arm position detector 301. As a result, the position of the end effector 62 attached to the arm section 20 is moved to the given target position.

That is, the arm driving part 30 (the first driving part) can change the posture of the end effector 62 via the support part 41. In other words, the arm driving part 30 (the first driving part) can drive the end effector 62 via the support part 41 in the directions of six degrees of freedom.

Further, the arm driving part 30 (the first driving part) may be configured to drive the end effector 62 via the support part 41 based on the position information of the end effector 62 detected by the detector 200.

The end effector position control part 12 controls the pedestal driving part 50 based on the target position given from the host device 100 and the position of the end effector 62 detected by the detector 200. As a result, the position of the end effector 62 attached to the arm section 20 is moved to the given target position.

For example, the pedestal driving part 50 (the second driving part) determines a position of the end effector 62 with respect to the workpiece WK based on the position of the end effector 62 detected by the detector 200.

### [Driving example of end effector by pedestal driving part]

(1) The pedestal driving part 50 (the second driving part) drives the end effector 62 such that the position of the end effector 62 with respect to the workpiece WK is not changed, based on the position of the end effector 62 detected by the detector 200.

For example, the arm section 20 of the robot unit 2 may be vibrated due to a disturbance or the like. In this case, the pedestal driving part 50 drives the end effector 62 such that the position of the end effector 62 with respect to the workpiece WK is not changed by displacing the end effector 62 in a reverse direction of the displacement due to the vibrations of the arm section 20.

(2) The pedestal driving part 50 (the second driving part) drives the end effector 62 to hold a predetermined target position of the end effector 62 based on the position information of the end effector 62 detected by the detector 200. The target position is stored in, for example, a storage unit (not shown).

(3) The pedestal driving part 50 (the second driving part) drives the end effector 62 based on the position information of the end effector 62 detected by the detector 200 and the target position information of the end effector 62 predetermined with respect to the workpiece WK.

(4) The pedestal driving part 50 (the second driving part) drives the end effector 62 in a plane including a second direction and a third direction based on the position information of the end effector 62 detected by the detector 200 when the end effector 62 is in the first posture. In addition, the pedestal driving part 50 (the second driving part) drives the end effector 62 in the plane including the third direction and the first direction based on the position information of the end effector 62 detected by the detector 200 when the end effector 62 is in the second posture. In addition, the pedestal driving part 50 (the second driving part) drives the end effector 62 in the plane including the first direction and the second direction based on the position information of the end effector 62 detected by the detector 200 when the end effector 62 is in the third posture.

Here, as described above, the first direction is, for example, the direction of gravity, the second direction is a direction perpendicular to the first direction, and the third direction is a direction perpendicular to the first direction and the second direction. Further, the second direction may be a direction crossing the first direction, and the third direction may be a direction crossing the first direction and the second direction.

In addition, even in the case of any one of the driving examples, the pedestal driving part 50 (the second driving part) drives the end effector 62 using different driving elements of the six driving elements (for example, the linear motor 500) according to the posture of the end effector 62.

Here, as described above, the magnitude of the displacement (a second stroke) of the end effector 62 driven by the pedestal driving part 50 is smaller than the magnitude of the displacement (a first stroke) of the end effector 62 driven by the arm driving part 30.

That is, the arm position control part 11 controls a rough position of the end effector 62 (i.e., rough motion control). The end effector position control part 12 controls a fine position of the end effector 62 (i.e., micro motion control).

The robot system 1 of the embodiment accurately controls the position or the posture of the end effector 62 according to the rough motion control by the arm position control part 11 and the micro motion control by the end effector position control part 12. That is, according to the robot system 1 of the embodiment, it is possible to improve control accuracy of the position or the posture of the end effector 62.

The end effector operation control part 13 controls various actuators included in the end effector 62. In the case of the end effector 62 shown as the above-mentioned example, the camera driving part 615 and the hand driving part 617 are provided. In this case, the end effector operation control part 13 controls the camera driving part 615 and the hand driving part 617 based on the end effector operation instruction given from the host device 100.

The generating part 14 generates three-dimensional information of the workpiece WK based on the detection results by the position detector 611 (the second detector). As described above, when the workpiece WK1 (for example, a screw) is fastened to the workpiece WK2 (for example, a screw hole), the generating part 14 generates three-dimensional information of the workpiece WK1 and the workpiece WK2 detected by the position detector 611. In this case, the arm position control part 11 and the end effector position control part 12 move the end effector 62 based on the displacement magnitude obtained from the relative position between the three-dimensional shape of the workpiece WK1 and the three-dimensional shape of the workpiece WK2.

For example, when the workpiece WK1 (for example, a screw) is fastened to the workpiece WK2 (for example, a screw hole), the predetermined target position information of the end effector 62 with respect to the workpiece WK is given to the controller 10 from the host device 100. In this case, the arm position control part 11 and the end effector position control part 12 controls the position or the posture or both of the end effector 62 by driving the arm driving part 30 and the pedestal driving part 50 based on the position information of the end effector 62 detected by the detector 200 and the predetermined target position information of the end effector 62 with respect to the workpiece WK. Further, the controller 10 may be provided outside the robot system 1, the control part configured to perform some of processing performed by the controller 10 is provided on the robot system 1, or the control part configured to perform other parts of the processing performed by the controller 10 may be provided outside the robot system 1.

Hereinabove, while the embodiment of the present invention has been described in detail with reference to the accompanying drawings, a specific configuration is not limited to the embodiment and various modifications may be made without departing from the scope of the present invention. The configurations disclosed in the above-mentioned embodiment may be combined.

Further, the respective parts included in each device in the embodiment may be realized by dedicated hardware, or further, may be realized by a memory and a microprocessor.

Further, the respective parts included in each device is constituted by a memory and a central processing unit (CPU), and the function thereof may be realized by loading a program configured to realize functions of the respective parts included in each device on a memory and executing the program.

In addition, the program configured to realize the functions of the respective parts included in each device may be recorded on a computer-readable recording medium, and the program recorded on the recording medium may be read and executed by a computer system to perform processing by the respective parts included in the controller. Further, "the computer system" disclosed herein includes OS or hardware such as peripheral equipment or the like.

In addition, "the computer system" also includes a homepage providing environment (or a display environment) when a WWW system is used.

In addition, "the computer-readable recording medium" is referred to as a portable medium such as a flexible disk, a magneto-optic disk, a ROM, a CD-ROM, or the like, or a storage device such as a hard disk or the like built in the computer system. Further, "the computer-readable recording medium" is a medium that dynamically holds a program for a short time like a communication wire when a program is transmitted via a network such as the Internet or the like or a communication line such as a telephone line or the like, or a medium that holds a program for a certain time like a volatile memory in a computer system that is a server or a client in this case. In addition, the program may be configured to realize some of the above-mentioned functions, and further, may be configured to realize the above-mentioned functions in combination of the program that is already recorded in the computer system.

### [Reference Signs List]

- 1: Robot system
- 2: Robot unit
- 3: End effector unit
- 10: Controller
- 11: Arm position control part
- 12: End effector position control part
- 13: End effector operation control part
- 14: Generating part
- 20: Arm section
- 30: Arm driving part
- 41: Support part
- 50: Pedestal driving part
- 60: Pedestal-attached end effector 60
- 62: End effector
- 70: Adapter
- 100: Host device
- 200: Detector
- 500: Linear motor

## Claims

1. A robot system comprising:
an end effector that is able to work on a workpiece;
a support part configured to support the end effector in a state in which the end effector is displaceable;
a first driving part configured to drive the end effector via the support part with a first stroke;
a detector configured to detect a position of the end effector; and
a second driving part that is disposed between the support part and the end effector and that is configured to drive the end effector with respect to the support part with a second stroke smaller than the first stroke based on a position information of the end effector detected by the detector.

2. The robot system according to claim 1, wherein the detector is a laser tracker that has an illumination part configured to radiate a laser beam to the end effector and a light receiving section configured to receive the laser beam reflected by the end effector, and that is configured to detect a position of the end effector based on a light reception result by the light receiving section.

3. The robot system according to claim 2, wherein the end effector has a reflector configured to reflect the laser beam radiated from the illumination part, and
the detector detects a position of the end effector by acquiring 3-dimensional position information of the reflector based on the light reception result by the light receiving section.

4. The robot system according to any one of claims 1 to 3, wherein the detector has an imaging part configured to generate image data by imaging the end effector and detects a position of the end effector based on the image data generated by the imaging part.

5. The robot system according to any one of claims 1 to 4, wherein the detector detects a position and a posture of the end effector.

6. The robot system according to any one of claims 1 to 5, wherein the end effector has a second detector configured to acquire information of the workpiece.

7. The robot system according to any one of claims 1 to 5, wherein the end effector has a second detector configured to detect a position of the workpiece.

8. The robot system according to claim 6 or 7, wherein the end effector has a third driving part driven to change an orientation of the second detector.

9. The robot system according to any one of claims 6 to 8, comprising:
a generating part configured to generate 3-dimensional information of the workpiece based on a detection result from the second detector; and
a controller configured to control the end effector to be driven using the first driving part or the second driving part or both based on the 3-dimensional information of the workpiece generated by the generating part.

10. The robot system according to any one of claims 6 to 9, wherein the second detector is a TOF type.

11. The robot system according to any one of claims 1 to 10, wherein the second driving part determines the position of the end effector with respect to the workpiece based on the position information of the end effector detected by the detector.

12. The robot system according to any one of claims 1 to 11, wherein the second driving part drives the end effector such that the position of the end effector with respect to the workpiece is not changed based on the position information of the end effector detected by the detector.

13. The robot system according to any one of claims 1 to 12, wherein the second driving part drives the end effector to maintain the predetermined target position of the end effector based on the position information of the end effector detected by the detector.

14. The robot system according to any one of claims 1 to 13, wherein the second driving part drives the end effector based on the position information of the end effector detected by the detector and a target position information of the end effector predetermined with respect to the workpiece.

15. The robot system according to any one of claims 1 to 14, wherein the second driving part reduces vibrations of the end effector.

16. The robot system according to any one of claims 1 to 15, wherein the second driving part is able to electromagnetically drive the end effector in a non-contact state.

17. The robot system according to any one of claims 1 to 16, wherein the second driving part is a linear motor having a magnetic field generating section configured to generate a magnetic field using a supplied current, and a magnetizing section configured to generate a repulsive force or an attractive force using the magnetic field generated by the magnetic field generating section.

18. The robot system according to any one of claims 1 to 17, wherein the second driving part is able to change a posture of the end effector.

19. The robot system according to any one of claims 1 to 18, wherein the second driving part is able to drive the end effector in directions of six degrees of freedom.

20. The robot system according to any one of claims 1 to 19, wherein the second driving part has six driving elements, and is able to adjust driving forces between the six driving elements and drive the end effector with respect to the support part in the directions of six degrees of freedom which are a first direction that is the direction of gravity, a second direction perpendicular to the first direction, a third direction perpendicular to the first direction and the second direction, a fourth direction axially around the first direction, a fifth direction axially around the second direction, and a sixth direction axially around the third direction.

21. The robot system according to claim 20, wherein, in a case the end effector is in a first posture, the second driving part drives the end effector in a plane including the second direction and the third direction based on the position information of the end effector detected by the detector,
in a case the end effector is in a second posture, the second driving part drives the end effector in a plane including the third direction and the first direction based on the position information of the end effector detected by the detector, and
in a case the end effector is in a third posture, the second driving part drives the end effector in a plane including the first direction and the second direction based on the position information of the end effector detected by the detector.

22. The robot system according to claim 20 or 21, wherein the second driving part drives the end effector using different driving elements among the six driving elements according to a posture of the end effector.

23. The robot system according to any one of claims 1 to 22, wherein the second driving part does not contribute to weight supporting of the end effector.

24. The robot system according to any one of claims 1 to 23, wherein the support part supports a weight of the end effector.

25. The robot system according to any one of claims 1 to 23, further comprising: an intermediate section that connects the support part and the end effector.

26. The robot system according to claim 25, wherein the intermediate section supports a weight of the end effector.

27. The robot system according to claim 25 or 26, wherein the intermediate section suppresses displacement due to a weight of the end effector.

28. The robot system according to any one of claims 25 to 27, wherein the intermediate section reduces vibrations of the end effector.

29. The robot system according to any one of claims 25 to 28, wherein the intermediate section attenuates vibrations given from outside.

30. The robot system according to any one of claims 25 to 29, wherein the intermediate section includes an elastic member.

31. The robot system according to claim 30, further comprising: an adjusting section configured to adjust an elastic force of the elastic member.

32. The robot system according to claim 31, wherein the elastic member is an air spring, and
the adjusting section is able to adjust a pneumatic pressure of the air spring.

33. The robot system according to any one of claims 30 to 32, wherein the intermediate section has a piezo element configured to reduce vibrations of the end effector in addition to the elastic member.

34. The robot system according to any one of claims 25 to 33, wherein the intermediate section supports the end effector in the direction of gravity regardless of a posture of the end effector.

35. The robot system according to any one of claims 25 to 34, wherein the intermediate section is able to support the end effector in directions of six degrees of freedom.

36. The robot system according to any one of claims 25 to 35, wherein the intermediate section has six support elements, and is able to adjust distribution of a supporting force between the six support elements and support the end effector in the directions of six degrees of freedom which are a first direction that is the direction of gravity, a second direction perpendicular to the first direction, a third direction perpendicular to the first direction and the second direction, a fourth direction axially around the first direction, a fifth direction axially around the second direction, and a sixth direction axially around the third direction.

37. The robot system according to claim 36, wherein the intermediate section is able to support the end effector by using the different support elements among the six support elements according to a posture of the end effector.

38. The robot system according to any one of claims 25 to 35, wherein the intermediate section has a first support element configured to support at least some of a weight of the end effector in the direction of gravity when the end effector is in a first posture, and a second support element configured to support at least some of the weight of the end effector in the direction of gravity when the end effector is in a second posture different from the first posture.

39. The robot system according to any one of claims 25 to 38, wherein the intermediate section is disposed between a recessed portion formed in one of the support part and the end effector and a protrusion portion inserted into the recessed portion and formed in the other one of the support part and the end effector.

40. The robot system according to claim 39, wherein the second driving part is disposed between the recessed portion and the protrusion portion.

41. The robot system according to any one of claims 1 to 40, wherein the first driving part drives the end effector via the support part based on the position information of the end effector detected by the detector.

42. The robot system according to any one of claims 1 to 41, wherein the first driving part is able to change the posture of the end effector via the support part.

43. The robot system according to any one of claims 1 to 42, wherein the first driving part is able to drive the end effector via the support part in directions of six degrees of freedom.

44. The robot system according to any one of claims 1 to 43, wherein the support part includes a connecting element configured to connect with a robot unit.

45. The robot system according to any one of claims 1 to 44, wherein the robot unit includes an articulated arm.

46. The robot system according to any one of claims 1 to 45, wherein the end effector has a second illumination part configured to radiate processing light for machining the workpiece with respect to the workpiece.

47. The robot system according to claim 46, wherein the detector detects the position information of the end effector while the processing light by the second illumination part is being radiated to the workpiece.

48. The robot system according to claim 47, wherein, based on a predetermined machining route and the position information detected by the detector, the first driving part drives the end effector via the support part, the support part supports the end effector in the direction of gravity, and the second driving part drives the end effector in a non-contact state in a direction perpendicular to a radiation direction in which the processing light is radiated.

49. The robot system according to claim 48, comprising an acceleration sensor configured to detect acceleration information of the end effector,
wherein the second driving part drives the end effector in a non-contact state in a direction perpendicular to the radiation direction based on the machining route, the position information detected by the detector, and the acceleration information detected by the acceleration sensor.

50. The robot system according to claim 49, further comprising a position sensor disposed between the support part and the end effector and configured to detect relative position information between the support part and the end effector,
wherein the second driving part drives the end effector in a non-contact state in a direction perpendicular to the radiation direction based on the machining route, the position information detected by the detector, the acceleration information detected by the acceleration sensor, and the relative position information detected by the position sensor.

51. An end effector system comprising:
an end effector that is able to work on a workpiece;
a support part that has a connecting element configured to connect the end effector to a robot unit and that is configured to support the end effector in a state in which the end effector is displaceable;
a detector configured to detect position information of the end effector; and
a driving part that is disposed between the end effector and the support part and that is configured to drive the end effector with respect to the support part with a second stroke smaller than a first stroke of the robot unit based on the position information of the end effector detected by the detector.

52. An end effector unit comprising:
an end effector that is able to work on a workpiece;
a support part that has a connecting element configured to connect the end effector to a robot unit and that is configured to support the end effector in a state in which the end effector is displaceable; and
a driving part that is disposed between the end effector and the support part and that is configured to electromagnetically drive the end effector with respect to the support part.

53. An adapter comprising:
a support part that has a first connecting element which is connectable with a robot unit and that is configured to support an end effector in a state in which the end effector is displaceable;
a pedestal part that has a second connecting element which is connectable with the end effector; and
a driving part that is disposed between the support part and the pedestal part and that is configured to electromagnetically drive the end effector with respect to the support part via the pedestal part.
